Europäisches Patentamt

European Patent Office

Office européen des brevets

(11) Veröffentlichungsnummer: **0 443 425 A1**

## (12) EUROPÄISCHE PATENTANMELDUNG

(21) Anmeldenummer: **91101992.5**

(22) Anmeldetag: **13.02.91**

(51) Int. Cl.⁵: **A61J 1/14**

(30) Priorität: **21.02.90 DE 4005441**

(43) Veröffentlichungstag der Anmeldung:
**28.08.91 Patentblatt 91/35**

(84) Benannte Vertragsstaaten:
**AT BE CH DE ES FR GB IT LI NL SE**

(71) Anmelder: **Fresenius AG**
**Gluckensteinweg 5**
**W-6380 Bad Homburg v.d.H.(DE)**

(72) Erfinder: **Heilmann, Klaus**
**Heideweg 1**
**W-6690 St. Wendel(DE)**

(74) Vertreter: **Dr. Fuchs, Dr. Luderschmidt**
**Dipl.-Phys. Seids, Dr. Mehler,Dipl.-Ing.-**
**Weiss**
**Abraham-Lincoln-Strasse 7, Postfach 4660**
**W-6200 Wiesbaden(DE)**

(54) **Schlauch.**

(57) Die Erfindung bezieht sich auf einen Schlauch (1) mit einem über die Länge des Schlauchs (1) gleichbleibenden, im wesentlichen kreisförmigen Innenquerschnitt. Um die Verbindung des Schlauches (1) mit den beiden Wandungen (7,8) eines Behältnisses, insbesondere eines Folienbeutels (6) so zu ermöglichen, daß die Herstellung mit geringem Aufwand erfolgen kann und daß keine Dichtungsprobleme auftreten, ist vorgesehen, daß die Wandung (3) des Schlauches (1) an zwei einander gegenüberliegenden Seiten jeweils einen nach außen vorspringenden, im wesentlichen keilförmigen, sich nach außen verjüngenden Ansatz (4) aufweist.

FIG.2

EP 0 443 425 A1

Die Erfindung bezieht sich auf einen Schlauch mit einem über die Länge des Schlauchs gleichbleibenden, stetigen. z.B. im wesentlichen kreisförmigen Innenquerschnitt.

Schläuche der bekannten Art sind aus den Anwendungsgebieten seit langer Zeit bekannt. Da üblicherweise die Wanddicke des Schlauches jeweils gleich dick ausgestaltet ist, weist ein derartiger Schlauch eine zylindrische Außenform auf. Diese Ausgestaltung bringt erhebliche Nachteile, wenn der Schlauch mit einem Behältnis oder einem Gefäß verbunden werden soll, welches im wesentlichen plattenförmige oder folienartige Wandungen aufweist. Es ist zwar möglich, eine Wandung des Behälters mit einer Ausnehmung zu versehen, durch welche der Schlauch durchgesteckt wird, zur Befestigung des Schlauches und zur Abdichtung ist es jedoch erforderlich, ein zusätzliches flanschartiges Bauteil zu verwenden. Diese Herstellungsweise ist somit aufwendig und kompliziert und weist den zusätzlichen Nachteil auf, daß der Schlauch im wesentlichen rechtwinklig aus der Wandung des Behälters oder Gefäßes abgeführt werden muß.

Insbesondere bei der Herstellung von medizinischen Folienbeuteln ist es wünschenswert, den Schlauch bereits bei der Herstellung des Folienbeutels an diesem zu befestigen, bevorzugterweise im Bereich der Schweißnaht, mittels welcher die beiden Teile des Folienbeutels miteinander verbunden werden. Es ist offensichtlich, daß ein Schlauch mit einer zylindrischen Außenform erhebliche Schwierigkeiten bereitet, da es nötig ist, das folienartige Material des Beutels um im wesentlichen den halben Umfang des Schlauches zu führen und nachfolgend im wesentlichen rechtwinklig umzuleiten, so daß die beiden Hälften des Folienbeutels im restlichen Randbereich miteinander verbunden werden können. Bei dieser Vorgehensweise treten zwei erhebliche Probleme auf. Das eine Problem besteht darin, daß es einfach nicht möglich ist, das Folienmaterial in entsprechend dichter Weise mit dem halben Außenumfang des Schlauchs zu verbinden, da aufwendige Vorrichtungen erforderlich sind, um das Folienmaterial gegen den Schlauch zu drücken und mit diesem zu verschweißen. Ein weiterer Nachteil hierbei besteht darin, daß in dem Umlenkbereich, in welchem das Folienmaterial umgeknickt und von dem Beutel weggeführt werden muß, Biegeradien erforderlich sind, so daß stets die Gefahr besteht, daß im Umlenkbereich an der Wandung des Schlauchs ein geringfügiger Hohlraum bestehen bleibt. Es müssen deshalb zusätzliche Maßnahmen ergriffen werden, um den Schlauch vollständig dicht mit dem Beutel zu verbinden. Ein weiterer erheblicher Nachteil ist dadurch gegeben, daß eine plane Lage der beiden Folien des Folienbeutels durch die Einbringung des Schlauches erheblich beeinträchtigt wird, so daß Faltenbildungen des Folienmaterials auftreten können, welche eine dichte Ausbildung der Randnaht verhindern können.

Nach dem Stand der Technik sind verschiedene Lösungen bekannt geworden, welche jedoch insgesamt nicht zur Überwindung der genannten Nachteile beitragen können.

Aus der US-PS 43 93 909 ist es bekannt, aus der Beutelwandung mittels spezieller Flanschelemente eine Ausleitung des Schlauches in abgeschrägter Richtung vorzunehmen. Hierbei ist es zwar möglich, ein seitliches Abstehen des Schlauches zu umgehen, die Probleme hinsichtlich der Verbindungen des Flansches mit dem Beutelmaterial sind jedoch nicht gelöst.

Aus der WO 83/00699 ist der Anschluß eines Schlauches an einen Beutel bekannt, bei welchem an dem Randbereich des Beutels ein rohrförmiger, aus dem Folienmaterial des Beutels bestehender Ansatzstutzen ausgeformt ist, mit welchem dann der eigentliche Schlauch verbunden werden kann. Diese Lösung ist ausgesprochen aufwendig und kostenintensiv, da bei der Herstellung des Beutels, d.h. der Verbindung der beiden Folienteile des Beutels, zusätzlich die rohrförmige Abzweigleitung ausgeformt werden muß, an welcher der Schlauch zu befestigen ist.

Die WO 82/04016 zeigt ein Flanschstück, welches ebenfalls als Teil der Beutelwandungen ausgestaltet ist und an welchem der Schlauch befestigt werden kann. Hierbei ergeben sich die gleichen Probleme wie bei der WO 83/00699.

Die US-PS 54 16 977 offenbart einen Einlegekörper, welcher zwischen beiden Beutelhälften einschweißbar ist. Der Einlegekörper ist mit mehreren Ausnehmungen versehen, deren Mündungen einen Flansch aufweisen, an welchem der Schlauch befestigt werden kann. Es ist hierbei zwar der Einlegekörper so ausgebildet, daß dieser in einfacherer Weise zwischen die beiden Folienteile einbringbar ist, der Einlegekörper als solcher ist jedoch ausgesprochen kompliziert ausgebildet und erfordert einen beträchtlichen Herstellungsaufwand, einerseits für den Einlegekörper selbst, als auch für die Anbringung der Schläuche. Dabei ist es insbesondere nachteilig, daß eine Vielzahl von unterschiedlichen Füge- oder Verbindungsvorgängen erforderlich sind, welche zm einen den Herstellungsaufwand erhöhen und zum anderen bezüglich der zu erzielenden Dichtheit Probleme bereiten können.

Die DE-OS 3145 303 betrifft eine flache Schlauchleitung, die aus zwei (folienartigen) Bahnen aus flexiblem Material besteht, bei der die obere und untere Bahn unter Bildung einer Hohlleitung an Stegen von definierter Breite unmittelbar und dauerhaft verbunden sind. Diese Schlauchleitung ist nicht zur Verbindung mit dem Beutel geeignet.

Gleiches gilt für die Schlauchleitung, die aus der DE-OS 3502445 bekannt ist.

Der Erfindung liegt die Aufgabe zugrunde, einen Schlauch der eingangs genannten Art zu schaffen, welcher bei einfachem Aufbau und einfacher Herstellbarkeit die aus dem Stand der Technik bekannten Probleme vermeidet und welcher insbesondere bei Folienbeuteln so in die Rand-Siegelnaht des Folienbeutels einschweißbar ist, daß die aus dem Stand der Technik bekannten Nachteile vermieden werden.

Erfindungsgemäß wird die Aufgabe dadurch gelöst, daß die Wandungen des Schlauchs an zwei einander im wesentlichen gegenüberliegenden Seiten jeweils einen nach außen vorspringenden, im wesentlichen keilförmigen, sich nach außen verjüngenden Ansatz aufweist.

Der erfindungsgemäße Schlauch zeichnet sich durch eine Reihe erheblicher Vorteile aus. Da an der Wandung des Schlauches die beiden keilförmigen Ansätze ausgebildet sind, welche sich über die gesamte Länge des Schlauches erstrecken, kann dieser an beliebiger Stelle mit dem jeweiligen Behältnis, beispielsweise einem Folienbeutel, verbunden werden. Es ist nicht erforderlich, daß der Schlauch, wie aus dem Stand der Technik bekannt, im Bereich der Wandung des Folienbeutels endet bzw. beginnt. Der Schlauch kann somit beispielsweise als Einfüll- oder Ablaufschlauch verwendet werden, welcher über einen beträchtlichen Bereich in den Innenraum des Beutels übersteht.

Ein weiterer, besonderer Vorteil der Erfindung liegt darin, daß keine zusätzlichen Einbauelemente, wie etwa Flansche o. ä., erforderlich sind. Zum einen verringern sich durch die Verminderung der Bauteile die Herstellungskosten, zum anderen ist eine geringe Anzahl an Fügeflächen erforderlich, so daß die Probleme hinsichtlich der Verschweißung und der Dichtheit erheblich minimiert werden.

Die beiden erfindungsgemäßen seitlichen Ansätze ermöglichen es, das Material der Wandung des Behälters oder Behältnisses ohne starke Umbiegungen o.ä. an den Schlauch anzulegen, so daß die Herstellung zum einen vereinfacht wird und zum anderen die plane Lage der Folienmaterialien nur unerheblich gestört wird. Die Erfindung ermöglicht es somit, Knicke, welche im Bereich der restlichen Randnaht durch diese Verformungen oder Verwerfungen verursacht werden könnten, vollständig zu vermeiden. Der erfindungsgemäße Schlauch eignet sich somit in besonders guter Weise zur Verwendung bei Folienbeuteln. Die nach außen vorspringenden keilförmigen Ansätze können sich entweder exakt gegenüberliegen, so daß sich im wesentlichen eine flache Ausgestaltung des Beutels ergibt, es ist jedoch auch möglich, die keilförmigen Ansätze so auszugestalten, daß sich eine ebene Grundlinie ergibt, während die Oberseite des Schlauches bogenförmig, beispielsweise in Form eines Teil-Zylindermantels ausgebildet ist. In beiden Fällen ist es möglich, den Schlauch an die jeweiligen Einsatzbedingungen anzupassen. Desgleichen ist es auch möglich, die keilförmigen Ansätze unter einem vorbestimmten, von 180° verschiedenen Winkel anzuordnen. Dabei werden die beiden letztgenannten Ausführungsformen ebenfalls zur Erfingung gerechnet.

Die keilförmige Ausbildung der Ansätze sowie deren nach außen verlaufende Verjüngung ermöglicht es, einen Übergang zwischen den Ansätzen und dem restlichen Verlauf der Randnaht praktisch ohne Störung auszubilden, so daß die aus dem Stand der Technik bekannten, an den Kanten auftretenden Hohlräume und Undichtigkeiten vollständig vermieden werden können.

In einer besonders günstigen Ausgestaltung der Erfindung ist vorgesehen, daß der Ansatz an seiner freien Kante einen plattenförmigen Randstreifen geringer Dicke aufweist. Dieser Randstreifen gestattet eine problemlose Verbindung mit dem Material des Behältnisses bzw. Folienbeutels, durch Verschweißen oder Verkleben.

In einer ebenfalls sehr günstigen Weiterbildung des erfindungsgemäßen Schlauchs ist vorgesehen, daß die Außenkontur des Schlauchs zylindrisch ausgebildet ist und daß sich der Ansatz tangential an die zylindrische Außenkontur anschließt. Der restliche, nicht mit dem Ansatz versehene Wandungsbereich des Schlauches kann somit in üblicher Weise mit gleichbleibendem Querschnitt versehen sein. Der tangentiale Übergang zu den Ansätzen gestattet ein gleichmäßiges Anliegen des Folienbeutels.

Die Ausbildung des Schlauches kann erfindungsgemäß so erfolgen, daß dieser, bezogen auf die Außenkontur eine im wesentlichen linsenförmige oder eine elliptische Querschnittsform aufweist. Die Breite des Schlauchs, bezogen auf dessen Höhe, ist somit erfindungsgemäß in weitem Umfang variabel und kann den jeweiligen Anfordernissen angepaßt werden, beispielsweise der Duktilität des Materials des Behältnisses oder Beutels.

Bevorzugterweise ist der Schlauch aus einem mit einem Folienbeutel verschweißbaren Material gebildet; der Schlauch kann jedoch hinsichtlicxh der Materialauswahl auch so ausgebildet sein, daß er mit einem zusätzlichen Konnektorstück verbunden werden kann, welches für eine weitere Verwendung gedacht ist. Weiterhin ist es möglich, den Schlauch an seiner Außenfläche mit einer Bindemittelschicht zu versehen, wobei es günstig ist, in üblicher Weise zwei unterschiedliche Materialien vorzusehen, u.a. PVC, PE, PP, Polyamide u. dgl. für den Schlauch und EVA, PVC oder Polyurethan für das Bindemittel. In Abhängigkeit von dem Anwendungszweck des Schlauches ist es möglich, dessen Material auf einfachste Weise den jeweiligen Anforderungen anzupassen, so daß es beispielsweise möglich ist, den Schlauch mit einem mehrschichtigen Folienbeutel zu verbinden, welcher eine innenliegende Schicht aus PVC und eine außenliegende Schicht aus EVA aufweisen kann.

Die Herstellung des erfindungsgemäßen Schlauches erfolgt bevorzugterweise mittels eines Extrudierverfahrens, wobei die sich nach außen verjüngenden Ansätze hinsichtlicxh des Extrudierverfahrens keine Schwierigkeiten bereiten, da geeignete Düsenformen in einfacher Weise herstellbar sind.

Sofern der Schlauch an seiner Innen- und/oder Außenfläche mit einer oder mehreren Bindemittelschichten versehen sein soll, können sowohl der Schlauch als auch die Bindemittelschicht(en) in einem Arbeitsgang koextrudiert werden. Es ist dabei insbesondere möglich, zwei oder mehrere unterschiedliche Polymere auf der äußeren oder auch auf der inneren Oberfläche des Schlauches durch Koextrosion aufzubringen, so wie dies beispielsweise aus der EP-A2-136 848 oder EP-A2-286 163 bekannt ist. Der erfindungsgemäße Schlauch zeichnet sich damit durch erhebliche Vorteile aus. Durch die Verwendung der Bindemittelschicht oder der mehreren Bindemittelschichten ergibt sich die Möglichkeit, den Schlauch problemlos mit dem Beutelmaterial zu verbinden, beispielsweise zu verschweißen, andererseits ist es möglich, das Lumen des Schlauches aus einem Material zu erzeugen, welches insbesondere hinsichtlich der medizinischen und/oder chemischen Anforderungen vorteilhaft ist. In ähnlicher Weise verhält es sich mit der auf die Innenwandung des Schlauches aufgebrachten Bindemittelschicht, diese kann bevorzugterweise dazu verwendet werden, den Schlauch mit weiteren Elementen, beispielsweise einem Konnektor o.ä. zu verbinden.

Der erfindungsgemäße Schlauch eignet sich in bevorzugter Weise zur Verwendung bei medizinischen Beuteln, welche aus zwei miteinander zu verbindenden Folien hergestellt werden sollen, da der Schlauch, wie bereits erwähnt, ohne Schwierigkeiten dichtend mit der Randnaht des Folienbeutels verbunden werden kann. Dabei ist es besonders günstig, daß keine scharfen Abkantungen oder Umbiegungen des Folienmaterials vorkommen, welche die Flexibilität des Beutels beeinträchtigen könnten.

Die Erfindung ist ebenfalls auf eine medizinische Beutelanordnung mit einem aus polymerisatfolien gebildeten Beutel gerichtet, wobei wenigstens ein polymeres Anschlußstück vorgesehen ist, das an seinem einen Ende in den Beutelrand eingeschweißt ist und wobei am anderen Ende des Anschlußstückes ein Verbindungselement vorgesehen ist. Bei dieser Beutelanordnung ist es besonders vorteilhaft, den erfindungsgemäßen Schlauch als Anschlußstück zu verwenden. Es ist somit möglich, auf der einen Seite des Schlauchstückes diesen mit der Folie eines Beutels zu verbinden, während die andere Seite des Schlauchstückes mit einem Konnektor verbunden ist. Erfindungsgemäß sind dabei, wie oben bereits erwähnt, die unterschiedlichsten Verbindungsverfahren möglich, beispielsweise ein Hitzeschweißen, ein Hochfrequenzschweißen oder ein Kleben. Die Länge des Schlauches kann größer als 10 cm sein, es ist beispielsweise günstig, diesen mit Längen von 25 und 50 cm auszubilden.

Im folgenden word die Erfindung anhand eines Ausführungsbeispiels in Verbindung mit der Zeichnung beschrieben. Dabei zeigt:

Fig. 1 eine perspektivische Ansicht eines ersten Ausführungsbeispiels des erfindungsgemäßen Schlauchs, in Verbindung mit einem schematisch dargestellten Beutel,

Fig. 2 eine stirnseitige, perspektivische Schnittansicht des Schlauches, welcher in die Randnaht eines Folienbeutels eingelegt ist,

Fig. 3 eine perspektivische Ansicht einer weiteren Ausgestaltung des erfindungsgemäßen Schlauches, und

Fig. 4 eine Schnittansicht eines mit einer Bindemittelschicht versehenen, koextrudierten Schlauches.

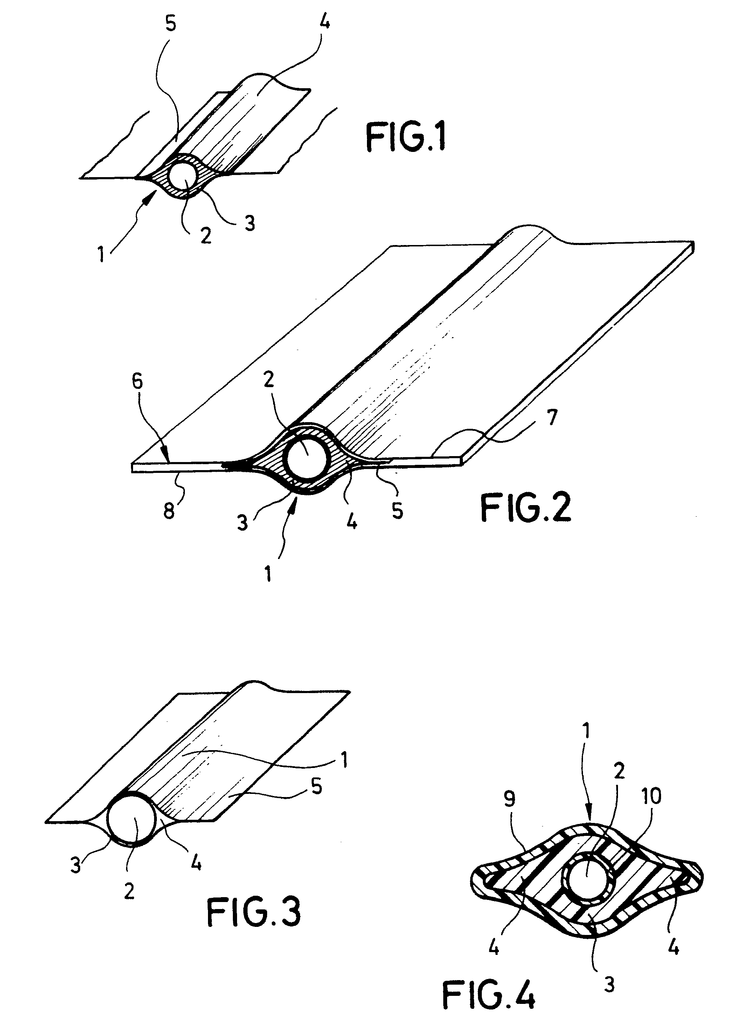

Der in den Fig. 1 - 4 dargestellte erfindungsgemäße Schlauch 1 weist einen im wesentlichen kreisförmigen Innenquerschnitt 2 auf, wie dies bei Schläuchen bekannt ist. Der Schlauch wird weiterhin durch eine im wesentlichen zylinderschalenförmige Wandung 3 gebildet, welche sowohl über den Umfang als auch über die Länge des Schlauches im wesentlichen mit dem gleichen Querschnitt versehen ist.

Erfindungsgemäß ist vorgesehen, daß an dem Schlauch an zwei einander gegenüberliegenden Seiten jeweils ein Ansatz 4 ausgebildcet ist, welcher, wie insbesondere aus Fig. 2 ersichtlich ist, keilförmig ausgestaltet ist und sich nach außen hin verjüngt. Der äußere Randbereich des sich über die gesamte Länge des Schlauches 1 erstreckenden Ansatzes 4 kann in Form eines plattenförmigen Randstreifens ausgestaltet sein, welcher, wie in Fig. 3 gezeigt, eine erhebliche Breite aufweist.

Die Fig. 2 zeigt ein Ausgestaltungsbeispiel, bei welchem der erfindungsgemäße Schlauch 1 in die Randnaht eines Folienbeutels 6 eingesetzt ist. Der Folienbeutel 6 besteht aus einer oberen Folie 7 und einer unteren Folie 8, welche im Randbereich des Beutels miteinander verbunden sind, beispielsweise mittels eines Schweißverfahrens. Es können hierbei handelsübliche Folienbeutel verwendet werden, welche aus dem Stand der Technik in den verschiedensten Ausführungsformen bekannt sind.

Der erfindungsgemäße Schlauch 1 ermöglicht ein Einlegen in den Dichtungs-Randbereich zwischen der oberen und der unteren Folie 7,8 ohne daß Abknickungen o.ä. der Folien 7,8 erforderlich wären. Zu diesem Zwecke beginnt der Ansatz 4 in etwa tangentialer Richtung an dem zylindrischen Umfang des Schlauchs 1 und erstreckt sich keilförmig oder mit konkaver Gestalt zu dem Randstreifen 5. Da der Randstreifen 5 eine sehr geringe Dicke aufweist, ergeben sich auch hier keinerlei Probleme bei der Verschweißung mit der oberen und der unteren Folie 7,8.

Die Fig. 4 zeigt in der Schnittansicht ein weiteres Ausführungsbeispiel des erfindungsgemäßen Schlauches 1. Dieser ist mit einer zylinderschalenförmigen Wandung 3 versehen, an welcher sich an gegenüberliegenden Seiten jeweils die Ansätze 4 erstrecken, so wie dies in Zusammenhang mit den Fig. 1 - 3 beschrieben wurde. An der Oberfläche des Schlauches ist eine koextrudierte Bindemittelschicht 9 aufgebracht, während im Lumen 2 des Schlauches 1 eine koextrudierte Bindemittelschicht 10 vorgesehen ist. Damit eignet sich der erfindungsgemäße Schlauch insbesondere dazu, auf der einen Seite mit der Folie eines Beutels verbunden zu werden, so wie dies in den Fig. 1 - 3 dargestellt ist und auf der anderen Seite mit einem Konnektor in Verbindung zu stehen. Alternativ zu dem Konnektor kann auch ein Y-Stück oder ein Übergangsadapter vorgesehen sein.

Die Erfindung ist nicht auf das gezeigte Ausführungsbeispiel beschränkt, vielmehr ergeben sich für den Fachmann im Rahmen der Erfindung vielfältige Abwandlungs- und Modivikationsmöglichkeiten. So ist es beispielsweise möglich, den Schlauch 1 mehrlumig auszubilden. Weiterhin können die Ansätze 4 auch in anderer Ausrichtung zueinander vorgesehen sein; es ist auch möglich, mehr als zwei Ansätze an dem Schlauch vorzusehen, beispielsweise um diesen mit einem aus drei Folienelementen bestehenden Behälter zu verbinden.

**Patentansprüche**

1. Schlauch mit einem über die Länge des Schlauchs (1) gleichbleibend, im wesentlichen stetigen Innenquerschnitt (2) dadurch gekennzeichnet, daß die Wandung (3) des Schlauchs (1) an zwei einander im wesentlichen gegenüberliegenden Seiten jeweils einen nach außen vorspringenden, im wesentlichen keilförmigen, sich nach außen verjüngenden Ansatz (4) aufweist.

2. Schlauch nach Anspruch 1, dadurch gekennzeichnet, daß der Ansatz (4) an seiner freien Kante einen plattenförmigen Randstreifen (5) geringer Dicke aufweist.

3. Schlauch nach Anspruch 1 oder 2, dadurch gekennzeichnet, daß die Außenkontur des Schlauchs (1) zylindrisch ausgebildet ist und daß sich der Ansatz (4) tangential an die zylindrische Außenkontur anschließt.

4. Schlauch nach einem der Ansprüche 1 - 4, dadurch gekennzeichnet, daß der Schlauch (1) eine im wesentlichen linsenförmige Querschnittsform aufweist.

5. Schlauch nach einem der Ansprüche 1 - 4, dadurch gekennzeichnet, daß der Schlauch (1) eine im wesentlichen elliptische Querschnittsform aufweist.

6. Schlauch nach einem der Ansprüche 1 - 5, dadurch gekennzeichnet, daß der Schlauch (1) aus einem mit einem Folienbeutel (6) verschweißbaren Material gebildet ist.

7. Schlauch nach einem der Ansprüche 1 - 5, dadurch gekennzeichnet, daß der Schlauch (1) aus einem mit einem Konnektor verschweißbaren Material gebildet ist.

8. Schlauch nach einem der Ansprüche 1 - 7, dadurch gekennzeichnet, daß der Schlauch (1) an seiner Innen- und/oder Außenfläche mit einer Bindemittelschicht (9,10) versehen ist.

9. Verwendung eines Schlauchs nach einem der Ansprüche 1 - 8 bei einem medizinischen Folienbeutel.

10. Medizinische Beutelanordnung mit einem aus Polymerisatfolien gebildeten Beutel, wenigstens einem polymeren Anschlußstück, das an seinem einen Ende in den Beutelrand eingeschweißt ist und einem Verbindungselement am anderen Ende des Anschlußstückes, gekennzeichnet durch ein Schlauchstück gemäß den Ansprüchen 1 - 8 als Anschlußstück.

FIG.1

FIG.2

FIG.3

FIG.4

| | Europäisches Patentamt | EUROPÄISCHER RECHERCHENBERICHT | Nummer der Anmeldung |
|---|---|---|---|

**EP 91 10 1992**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 693 189 (RYAN)<br>* Spalte 1, Zeilen 48-53; Figuren 1,2 *<br>— — — | 1-4,6,9, 10 | A 61 J 1/14 |
| X | US-A-3 519 158 (ANDERSON)<br>* Spalte 2, Zeile 60 - Spalte 3, Zeile 27; Figuren 1,2,4 *<br>— — — | 1 | |
| A | EP-A-0 082 703 (ELI LILLY AND CO.)<br>* Seite 10, Zeile 1 - Seite 11, Zeile 18; Figur 3 *<br>— — — | 1 | |
| A | EP-A-0 126 473 (UNION CARBIDE CORP.)<br>* Seite 4, Zeilen 3-28; Figuren 2-4 *<br>— — — | 1 | |
| A | US-A-4 410 026 (BAXTER TRAVENOL LAB.)<br>* Spalte 8, Zeilen 13-23; Figur 4 *<br>— — — | 1,2,4 | |
| A | DE-C-1 052 602 (FENWAL LAB.)<br>* Spalte 6, Zeilen 24-40; Figur 6 *<br>— — — | 5 | |
| A,D | EP-A-0 136 848 (BAXTER TRAVENOL LAB.)<br>* Insgesamt *<br>— — — — — | 8 | |

| | RECHERCHIERTE SACHGEBIETE (Int. Cl.5) |
|---|---|
| | A 61 J<br>A 61 M |

Der vorliegende Recherchenbericht wurde für alle Patentansprüche erstellt

| Recherchenort | Abschlußdatum der Recherche | Prüfer |
|---|---|---|
| Den Haag | 26 April 91 | BAERT F.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument